Europäisches Patentamt

European Patent Office

Office européen des brevets

(11) Publication number: **0 042 897**
**B1**

(12) **EUROPEAN PATENT SPECIFICATION**

(45) Date of publication of patent specification: **29.08.84**

(21) Application number: **80302225.0**

(22) Date of filing: **02.07.80**

(51) Int. Cl.³: **C 04 B 35/04, C 04 B 35/68, C 21 C 5/44, B 22 D 11/10, B 22 D 41/02**

(54) Method of making the lining of a vessel for molten metal and lining so made.

(43) Date of publication of application:
**06.01.82 Bulletin 82/01**

(45) Publication of the grant of the patent:
**29.08.84 Bulletin 84/35**

(84) Designated Contracting States:
**BE DE FR GB IT LU NL SE**

(56) References cited:
**DE-A-2 630 500**
**DE-A-2 743 374**
**DE-B-1 771 742**
**DE-B-2 048 488**
**DE-C- 722 159**
**DE-U-7 619 744**

(73) Proprietor: **AIKOH CO. LTD.**
**1-39, Ikenohata 2-chome Taito-ku**
**Tokyo (JP)**

(72) Inventor: **Takashima, Masaru**
**1047, Inokata Komae-shi**
**Tokyo (JP)**

(74) Representative: **Marsh, Roy David et al**
**Brewer & Son 5-9, Quality Court Chancery Lane**
**London WC2A 1HT (GB)**

Courier Press, Leamington Spa, England.

## Description

This invention relates to an improvement in a lining for a vessel such as ladle or tundish which holds or treats a melt of high density and high temperature, such as molten metal and particularly molten steel, and, more particularly, concerns a method of making such a lining.

Generally, a vessel which holds or treats molten metals is constructed in such a way that the inner side of a metallic shell is covered with a refractory based on refractory material or heat-insulating material, as a non-consumable lining, and then said non-consumable lining is covered with brick, unshaped refractory and a heat-insulating moulding, each alone or in combination, as a consumable lining which is brought into contact with a melt having a different composition. In receiving a melt it is usual that the lining material of the vessel is preheated by a burner in order that the temperature of the melt may be lowered as little as possible while the melt is held.

One of the materials which is most heat-resistant when used as a conventional lining refractory for melts and particularly molten steel is magnesia, which is comparatively less expensive, but has a large expansion coefficient. Examples of use of magnesia are described in DE—U—7619744 and DE—A—630500.

When magnesia is used for the lining of melt vessels preheating thereof causes, as a consequence of the large expansion coefficient mentioned above, bending and joint breaking of the lining. This tends to loosen it, and therefore, in the presence of conditions such as the impact of receiving the melt, spalling and pressure can cause accidents such as release of the lining and consequent penetration of the melt past the lining. This means that it is difficult and delicate safely to line a ladle or tundish with magnesia refractory. Consequently, mobility in work planning is heavily restricted.

An object of the invention is to provide a vessel such as a ladle or tundish for containing molten metals, which does not cause troubles such as bending and joint breaking of a lining during the period from preheating to receiving and holding the melt by carrying out a lining with a specific moulded magnesia lining; and a method for making said moulded lining.

The moulded lining is obtained by mixing 65—85% by weight of a magnesia-based aggregate such as magnesia clinker, dolomite clinker, magnesite, spinel, olivin sand and peridotite, and 10—30% by weight of a hydrating inorganic material such as slaked line, quick lime, slaked gypsum, light magnesia, cement, light dolomite, magnesium chloride, magnesium sulphate, sodium phosphate, barium hydroxide, strontium hydroxide, aluminium sulphate, alum and aluminium hydroxide, and if necessary up to 7% by weight of a heat-insulating material comprising refractory fibres and light refractory materials selected from among asbestos, rock wool, slag wool, kaolin fibre, glass wool, alumina fibre, zirconia fibre, magnesia fibre, silicon carbide fibre, perlite, expanded shale and hollow alumina, and/or up to 5% of an organic fibrous material selected from among pulp, beaten waste paper, cotton fibre, hemp fibre, synthetic or regenerated fibre, animal hair and human hair; the mixture is added with water for making 50—60% slurry, the slurry is moulded under no pressure by pouring or frame moulding with a suction type hydroextractor; and after squeezing the moulding is coagulated at a temperature lower than 200°C for solidification thereafter removing most of the bound water, e.g. water of crystallisation, of said hydrating inorganic material, or if the aggregate is comparatively of great expansion said moulding is coagulated at a temperature lower than 100°C thereafter removing most of the free moisture and a part of the bound water.

The kinds and mixing ratio of the mixing materials are within the range of said limited values in order that the porosity becomes 25 to 50% while the bulk density becomes 1.4 to 2.0, and with other mixing ratios than the above it is difficult to obtain a satisfactory moulding. The values of said porosity and bulk density show porous and light properties compared with magnesia brick, and therefore if the moulding is provided at the inner surface, as a lining of a vessel for molten metal it maintains high heat-insulating, heat-retaining properties, less heat loss of hot melt, and a smaller drop in temperature of the melt when the melt is received compared with bricks. Further, when the vessel is preheated the bound water of said hydrating inorganic material and the remaining free moisture in said moulding are escaped until the temperature becomes 1000°C and they are offset by the expansion of said magnesia-based aggregate thereby enabling any alteration of dimensions to lie within an expansion of not more than 0.6% and a contraction of not more than 0.3%. Unlike magnesia bricks such function and effects are produced thanks to the contraction caused by the decomposition of said hydrating inorganic material. Accordingly, at the time of preheating the lining may not have bending and joint breaking as well as a fear of causing troubles such as release and the insertion of melt. Moreover, a lesser degree of skill is needed in carrying out the lining and a far shorter period of preheating time will suffice in the case of the same thickness as brick and unshaped refractory.

The insulating material in the mixing materials will be added if it is necessary to enhance the heat-insulating properties of the moulding, but with greater than 7% by weight thereof the refractory property of the moulding will be degraded reducing the useful life of the moulding. Further, the organic fibrous materials are used as an agent for increasing the green moulding strength for safe-guarding the mouldings from accidents such as cracking and breaking by deformation caused when they are squeezed and transferred during the period until they are coagulated. The organic fibrous materials exhibit these effects to a lesser degree than inorganic fibres, but if they exceed 5% by weight the heating strength of the moulding becomes weak with the danger of collapse.
  The invention will now be described more in detail by way of example.
(1) Mixing example of lining materials (% by weight)

|  | Mixing A | Mixing B | Mixing C | Mixing D | Mixing E |
|---|---|---|---|---|---|
| Magnesia clinker | 83 | 50 | 7 | — | 70 |
| Olivin sand | — | 30 | 70 | 74 | — |
| Light magnesia | 12 | 5 | 15 | 13 | 25 |
| Light dolomite | — | 9 | — | 10 | — |
| Magnesium chloride | — | 5 | 6 | 3 | 5 |
| Slag wool | 3 | — | 2 | — | — |
| Pulp | 2 | 1 | — | — | — |

3

## (2) Making method

| | | | | | | | |
|---|---|---|---|---|---|---|---|
| Mixing A: | Slurry | 50% concentration | Filtration moulding by suction | 80°C | Coagulation | Solidification | |
| Mixing B: | Slurry | 55% concentration | Filtration moulding by suction | 100°C | Coagulation | Solidification | |
| Mixing C: | Slurry | 55% concentration | Filtration moulding by suction | 180°C | Coagulation | Solidification | Drying |
| Mixing D: | Slurry | 60% concentration | Filtration moulding by suction | 190°C | Coagulation | Solidification | Drying |
| Mixing E: | Slurry | 60% concentration | Moulding by pouring | 190°C | Coagulation | Solidification | Drying |

## (3) Properties

| | | | | |
|---|---|---|---|---|
| Mixing A | Bulk density | 1.95 | Porosity | 27.5% |
| Mixing B | Bulk density | 1.87 | Porosity | 29.1% |
| Mixing C | Bulk density | 1.71 | Porosity | 32.6% |
| Mixing D | Bulk Density | 1.52 | Porosity | 39.4% |
| Mixing E | Bulk Density | 1.45 | Porosity | 43.2% |

0 042 897

# 0 042 897

A moulding thus made was lined onto refractory bricks of 140 mm thickness in a 30-ton tundish for the continuous casting of steel, in dimensions of 400 mm width × 500 mm length × 65 mm thickness. Ten continuous-continuous castings, each continuous casting being for 250 ton and having an average pouring time of 50 minutes, were carried out, the remaining thickness could retain thicker than 20 mm.

The Example is with reference to a tundish for the continuous casting of steel, but the moulding according to the invention can of course be used as a heat-resistant, heat-insulating lining for ladles wherein, as with a tundish, the conditions to melt flow and temperature degree are gentle, and besides it can be used even for the walls of refining and heating furnaces.

## Claims

1. A method of making from a magnesia-based aggregate a lining for a vessel for molten metal, characterised in that from 65 to 85% by weight of the magnesia-based aggregate and from 10 to 30% by weight of a hydrating inorganic material are mixed with water thereby to prepare a slurry containing 50 to 60% of solid, the slurry is moulded by filtration by means of suction or by pouring, and the moulding is coagulated and solidified at a temperature below 200°C whereby a part at least of the bound water of said hydrating inorganic material is removed, and the resulting coagulated and solidified moulding has a bulk density in a range of from 1.4 to 2.0 and a porosity in a range of from 25 to 50%.

2. A method of making a lining for a vessel for a molten metal as claimed in claim 1 characterised in that the step of coagulating and solidifying the slurry is carried out at a temperature below 100°C whereby most of the free moisture and a part of the bound water of said hydrating inorganic material are removed.

3. A method as claimed in claim 1 or 2 including the step of mixing with the other components of the slurry up to 7% by weight of a heat-insulating material comprising refractory fibres.

4. A method as claimed in claim 1, 2 or 3 including the step of mixing with the other components of the slurry up to 5% by weight of an organic fibrous material.

5. A lining for a vessel for containing molten metal, made by a method as claimed in any one of the preceding claims.

## Patentansprüche

1. Verfahren zur Herstellung einer Auskleidung eines Behälterts für geschmolzenes Metall aus einer Masse auf Magnesia-Grundlage, dadurch gekennzeichnet, daß 65 bis 85 Gewichts-% der Masse auf Magnesia-Grundlage und 10 bis 30 Gewichts-% eines hydratisierenden anorganischen Materials mit Wasser vermischt werden und dabei ein 50 bis 60% Feststoffe enthaltender Brei erzeugt wird, der Brei durch Abfiltern mit Absaugen oder Gießen geformt wird und der Formling sodann bei einer Temperatur unterhalb 200°C koaguliert und verfestigt wird, wobei zumindest ein Teil des gebundenen Wassers des hydratisierenden anorganischen Materials entfernt wird und daß der sich ergebende koagulierte und verfestigte Formling eine Rohdichte (bulk density) im Bereich von 1,4 bis 2,0 und eine Porosität im Bereich von 25 bis 50 % aufweist.

2. Verfahren nach Anspruch 1, dadurch gekennzeichnet, daß der Verfahrensschritt des Koagulierens und Verfestigens des Breis bei einer Temperatur unterhalb 100°C durchgeführt wird und dabei der größte Teil der freien Feuchtigkeit und ein Teil des gebundenen Wassers des hydratisierenden anorganischen Materials entfernt werden.

3. Verfahren nach Anspruch 1 oder 2, gekennzeichnet durch den Verfahrensschritt, daß bis zu 7 Gewichts-% eines feuerfeste Fasern enthaltenden wärmeisolierenden Materials mit den anderen Komponenten des Breis vermischt werden.

4. Verfahren nach Anspruch 1, 2 oder 3, gekennzeichnet durch den Verfahrensschritt, daß bis zu 5 Gewichts-% eines organischen Fasermaterials mit den anderen Komponenten des Breis vermischt werden.

5. Auskleidung für einen Behälter für geschmolzenes Material, der nach einem in einem der vorhergehenden Ansprüche beanspruchten Verfahren hergestellt ist.

## Revendications

1. Procédé de fabrication, à partir d'un agrégat de magnésie, d'un garnissage pour un récipient pour du métal fondu, caractérisé en ce que de 65 à 85 % en poids de l'agrégat à base de magnésie et de 10 à 30 % en poids d'une matière minérale hydratante sont mélangés à de l'eau pour préparer ainsi une bouillie contenant 50 à 60 % de solide, la bouillie est moulée par filtration au moyen de succion ou par coulée, et la moulage est coagulé et solidifié à une température inférieure à 200°C, grâce à quoi une partie au moins de l'eau liée de cette matière minérale hydratante est éliminée, et le moulage coagulé et solidifié obtenu a une densité apparente dans l'intervalle de 1,4 à 2,0 et une porosité dans l'intervalle de 25 % à 50 %.

2. Procédé de fabrication d'un garnissage pour un récipient pour métal fondu suivant la revendi-

5

cation 1, caractérisé en ce que l'opération de coagulation et de solidification de la bouillie est effectuée à une température inférieure à 100° C, grâce à quoi la plus grande partie de l'humidité libre et une partie de l'eau liée sont éliminées de cette matière minérale hydratante.

3. Procédé suivant l'une quelconque des revendications 1 ou 2, comprenant le stade de mélange avec les autres constituants de la bouillie jusqu'à 7 % en poids d'une matière d'isolation thermique comprenant des fibres réfractaires.

4. Procédé suivant l'une quelconque des revendications 1, 2 ou 3, comprenant le stade de mélange avec les autres constituants en poids de la bouillie jusqu'à 5 % en poids d'une matière fibreuse organique.

5. Garnissage pour un récipient pour contenir du métal fondu, fabriqué par un procédé suivant l'une quelconque des revendications précédentes.